# EUROPÄISCHE PATENTSCHRIFT

(11) **EP 2 218 838 B1**
(45) Veröffentlichungstag und Bekanntmachung des Hinweises auf die Patenterteilung: **10.05.2017**
(21) Anmeldenummer: 10001188.1
(22) Anmeldetag: 05.02.2010
(51) Int. Cl.: E03B 9/04, F16K 1/54, E03B 9/02

(54) **Ventil für einen Hydranten**
Valve for a hydrant
Soupape pour une prise d'eau

(30) Priorität: 11.02.2009 CH 2052009
(43) Veröffentlichungstag der Anmeldung: 18.08.2010
(73) Patentinhaber: E. Hawle Armaturenwerke GmbH, 4840 Vöcklabruck (AT)
(72) Erfinder: Niederer, Viktor, 6030 Ebikon (CH)
(74) Vertreter: Puchberger & Partner Patentanwälte

(56) Entgegenhaltungen:
- EP-A1- 0 457 132
- WO-A1-98/02682
- DE-A1- 1 816 002
- DE-A1-102006 054 151
- US-A- 1 899 978
- US-A- 2 541 176

## Beschreibung

Gegenstand der Erfindung ist ein Ventil für einen Hydranten gemäß Oberbegriff des Patentanspruchs 1.

Zeitgemäße Hydranten weisen radial wirkende Ventile auf, welche ein zylindrisches Rohr umfassen, in welchem ein Kolben durch eine Spindel axial verschiebbar geführt ist. Bei vollständig geschlossenem Ventil befindet sich der zylindrische Kolben mindestens teilweise innerhalb des oberen Endes des Rohres. Zum Öffnen des Ventils wird der Kolben aus dem Rohr axial hinausgeführt. Um die gesamte peripher liegende Dichtfläche aus dem Rohr hinausführen zu können, sind an der Unter - oder an der Oberseite des Kolbens üblicherweise zwei einander gegenüberliegende Führungsmittel angeformt, welche den Kolben im Rohrende weiterhin exakt geführt halten. Die bis heute bekannten Kolben sind scheibenförmig und an deren Peripheren, dh den Umfangsflächen, können umlaufende Nuten angebracht sein. Um eine möglichst optimale Dichtung zu erlangen, ist die Peripherie der Kolben mit einer elastischen Maße, z.B. Gummi, überzogen.

Nachteilig an diesem bekannten Ventil ist die latente Gefahr, dass durch mitgeführte Steinchen oder Sand die elastische Oberfläche verletzt und dadurch die Dichtigkeit des Ventils abnimmt.

Aus der DE10 2006 054151 A1 ist ein Ventil für einen Hydranten bekannt, umfassend ein zylindrisches Rohr das in das Steigrohr des Hydranten mündet, und einen im Rohr axial mit einer Spindel verschiebbar gelagerten Kolben, der bei geöffnetem Ventil außerhalb des Rohrendes zu liegen kommt.

Ein Nachteil derartiger Ventile aus dem Stand der Technik besteht darin, dass beim Öffnen des Ventils, d.h. beim Herausziehen des Kolbens aus dem Ende des zylindrischen Rohrs, beim Verlassen des scheibenförmigen Kolbenteils sofort eine verhältnismäßig große Wassermenge austreten kann und damit Schläge auf das Rohrnetz wirken können. Schläge auf das Rohrnetz treten auch auf, wenn das Ventil geschlossen wird.

Des weiteren ist es notwendig, auch wenn nur eine geringe Wassermenge benötigt wird, vorerst den gesamten Kolben vollständig aus dem Rohr herauszuheben, um durch einen schmalen umlaufenden Spalt den Wasseraustritt zu ermöglichen. Dies benötigt eine große Anzahl von Umdrehungen an der Spindel.

Aus der WO98 / 02682 A1 ist weiters ein Kolben für ein Ventil bekannt, der an seinem Umfang mehrere sich in axialer Richtung erweiternde Aussparungen aufweist, um den Durchfluss des Fluids besser regulieren zu können. Der beschriebene Ventilkolben ist jedoch kompliziert aufgebaut und löst nicht das oben beschriebene Problem, dass durch mitgeführte Steinchen oder Verunreinigungen im Fluid das Ventil beschädigt wird.

Weiters beschreibt die US 2 541 176 A einen Ventilkolben mit Führungsmitteln, der an seinem Umfang zum Zweck der Durchflussregulierung mehrere aus **geraden Abschnitten zusammengesetzte, keilförmige Aussparungen aufweist. Das Anwendungsgebiet dieser Vorrichtung dürfte im Bereich der Regeltechnik liegen, bei der es auf die exakte Einstellung bestimmter Durchflussmengen ankommt. Das Problem der im Fluid befindlichen Verunreinigungen tritt bei diesem Anwendungsgebiet im Allgemeinen nicht auf.**

**Auch in der** EP 0 457 132 A1 **ist ein Ventilkolben mit keilförmigen, am Kolbenumfang spitz zusammenlaufenden Ausschnitten offenbart. Derartige Ventilkolben werden in der Regeltechnik verwendet, um die Durchflussmenge eines Fluids exakt einzustellen, und können die oben beschriebenen Probleme nicht lösen.**

**Im Gegensatz zu den obigen Druckschriften beschreibt die** DE 18 16 002 A1 **einen Ventilkolben mit einem sich zum Ende hin V-förmig verbreiternden Schlitz. Auch hier tritt sofort das Problem auf, dass sich Steinchen oder Verunreinigungen im Fluid beim Öffnen des Ventils in dem spitzen, umfangsseitigen Bereich des Kolbens festsetzen bei der weiteren Öffnung des Ventils die elastische Oberfläche im Inneren des Ventils beschädigen.**

**Aus der** US 1 899 978 A **ist schließlich ein Ventil bekannt, bei dem zum Zweck der Regulierung der durchtretenden Fluidmenge das Rohrende selbst anstatt des Kolbens angeformt ist. Der Kolben selbst weist keinerlei besondere Geometrie auf.**

**Die erfindungsgemäße Aufgabe, ein Ventil zu schaffen, das einerseits eine feine Dosierung der Ventilöffnung ermöglicht, und andererseits sicherstellt, dass kleine Steinchen oder Verunreinigungen im Fluid zuverlässig ausgespült werden, kann durch die Vorrichtungen aus dem Stand der Technik nicht gelöst werden.**

**Insbesondere soll die vorliegende Erfindung die Aufgabe lösen, ein Ventil zu schaffen, welches mit weniger Umdrehungen an der Spindel, die den Kolben axial verschiebt, bereits eine geringe Durchflußmenge zu erlangen.**

Eine weitere Aufgabe besteht darin, dass Ventil derart auszubilden, das im Wasser mitgeführte Festkörper (Sand, Steine) schon bei geringer Durchflußmenge ungehindert das Ventil passieren können, ohne beim nachträglichen Schließen die elastische Oberfläche im Kolben zu verletzen.

Gelöst wird diese Aufgabe durch ein Ventil mit den Merkmalen des Patentanspruchs 1.

Vorteilhafte Ausgestaltungen des Ventils sind in den abhängigen Ansprüchen umschrieben.

Durch die erfindungsgemäße Formgebung der Peripherie des Kolbens kann bereits nach wenigen Umdrehungen an der Hubspindel das Wasser fein dosiert eine nicht in Umfangsrichtung verlaufende schlitzförmige, sondern sich axial ausdehnende Öffnung durch das Ventil ausfließen. Dabei entstehen keine Schläge, da beim Öffnen des Ventils, d.h. beim Verschieben des Kolbens, aus dem Rohr anfänglich in einem kurzen Umfangsabschnitt nur sehr wenig Wasser austritt und dadurch der Druckaufbau im nachfolgendem Rohr sehr langsam vor sich geht. Durch die hohe Geschwindigkeit des das Ventil im Austrittsbereich durchfließenden Wassers werden feste Verunreinigungen, wie Sand und Steine, durch den sich stetig vergrößernden, etwa dreieckigen oder quadratischen Durchtrittsquerschnitt hindurchgeschwemmt. Bereits bei kleiner Durchflußmenge können auch größere Steine durch die nun nicht mehr schlitzförmige Durchtrittsöffnung hindurchtreten.

Anhand illustrierter Ausführungsbeispiele wird die Erfindung näher erläutert. Es zeigen
Fig. 1 eine perspektivische Darstellung eines Ventilkolbens von der Seite,
Fig. 2 eine perspektivische Darstellung des Ventilkolbens gemäß Fig. 1, von schräg oben
Fig. 3 eine perspektivische Darstellung des Ventilkolbens gemäß Fig. 2, teilweise eingetaucht in das Ende eines zylindrischen Rohres,
Fig. 4 eine perspektivische Darstellung des Ventilkolbens gemäß Fig. 2, weiter eingetaucht in das Ende eines zylindrischen Rohres,

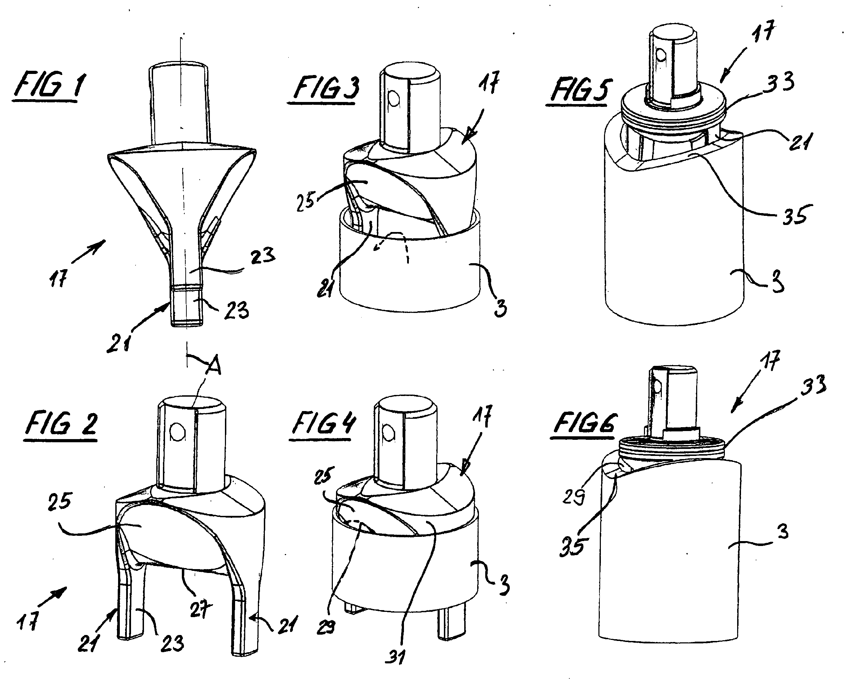

   Die Figuren 3 und 4 zeigen wegen des ebenen Rohrendes eine nicht erfindungsgemäße Ausführungsform eines Ventils.
Fig. 5 eine erfindungsgemäße Ausgestaltung des Ventils mit einem scheibenförmigen Kolben und mit einem Rohr mit einer gebogenen Stirnfläche, Kolben ganz ausgefahren,
Fig. 6 eine weitere erfindungsgemäße Ausgestaltung des Ventils mit einem scheibenförmigen Kolben und mit einem Rohr mit einer gebogenen Stirnfläche, Kolben teilweise eingeführt,

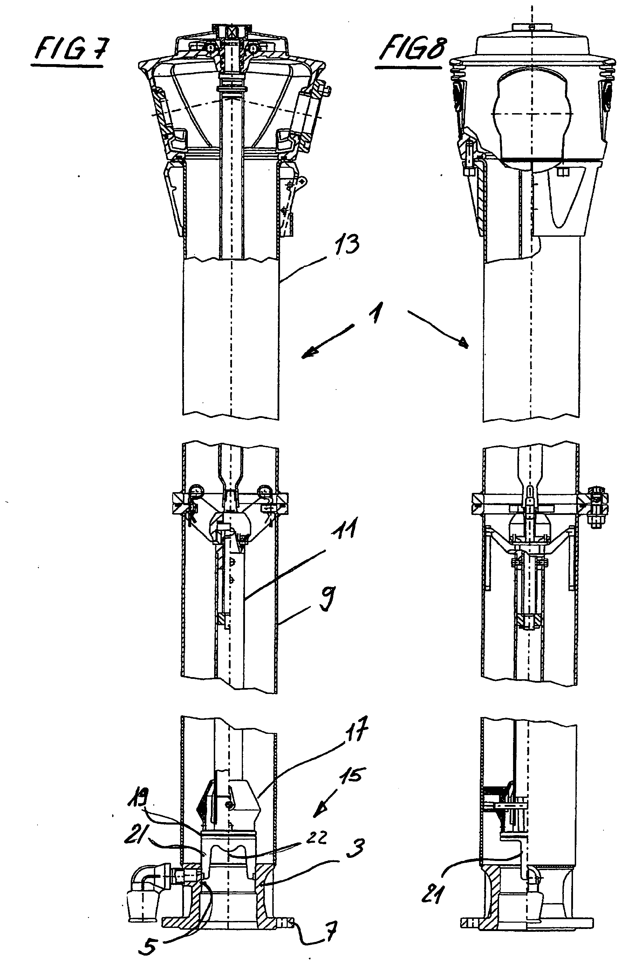

Fig. 7 einen Axialschnitt durch einen, dem Stande der Technik entsprechenden Hydranten, seitliche Ansicht und
Fig. 8 einen Axialschnitt durch einen, dem Stande der Technik entsprechenden Hydranten, Frontansicht.

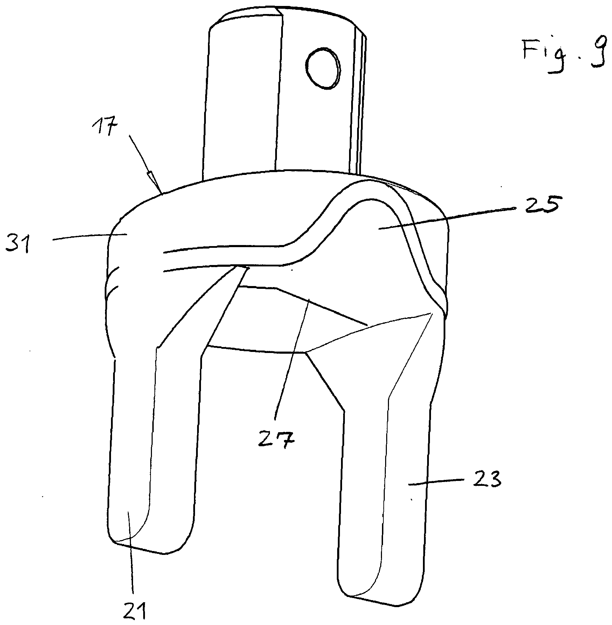

Fig. 9 zeigt eine Ansicht einer weiteren Ausführungsform des erfindungsgemäßen Kolbens von schräg unten

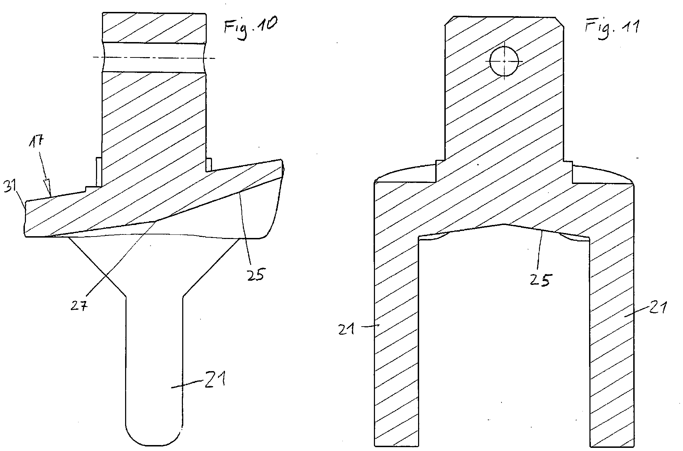

Fig. 10 zeigt eine Schnittdarstellung der Ausführungsform des Kolbens aus Fig. 9
Fig. 11 zeigt eine weitere Schnittdarstellung der Ausführungsform der Fig. 9 und

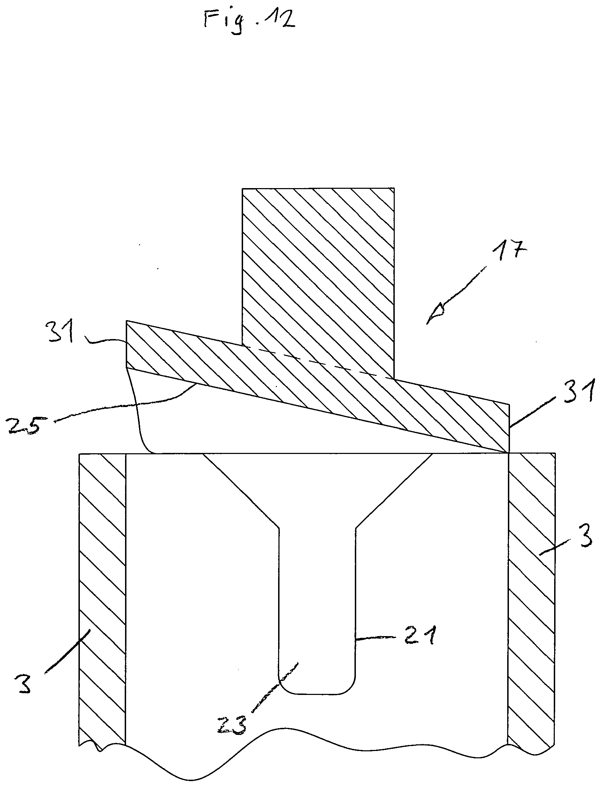

Fig. 12 zeigt eine Schnittdarstellung einer Ausführungsform eines Kolbens in einem Rohr.

In den Fig. 7 und 8 ist der Querschnitt eines mit einem herkömmlichen Ventil ausgestatteten Hydranten 1 ersichtlich. Die Kolben der Fig. 7 und Fig. 8 entsprechen damit dem Stand der Technik. Am unteren Ende ist, schraffiert dargestellt, ein Rohr 3 mit einem zylindrischen Bohrungsabschnitt 5 und einem Flansch 7 sichtbar. Darüber ist mit Bezugszeichen 9 ein Steigrohr ersichtlich, in welchem mit geeigneten bekannten Mitteln die Spindel 11 axial abgestützt wird. Über dem Steigrohr 9 ist der üblicherweise über den gewachsenen Boden hinausragende Aufsatz 13 ersichtlich. Nebst dem Rohr 3 umfasst das mit Bezugszeichen 15 bezeichnete Ventil weiter einen Kolben 17 mit einem zylindrischen Abschnitt 19 und daran angeformt Führungsmittel 21, welche in den teilweise aus dem zylindrischen Abschnitt 19 des Rohrs 3 herausgezogenen Kolben 17 radial führen. Die Führungsmittel 21 umfassen in dem in den Figuren 7 und 8 dargestelltem Ausführungsbeispiel, wie besonders in Fig. 8 ersichtlich, schmale, außen zylindermantelförmige Abschnitte, welche an der zylindrischen Bohrung 5 mit geringem Spiel anliegen und auf diese Weise den Kolben 17 auch bei geöffnetem Ventil exakt radial führen. Die zwischen Führungsmitteln 21 sichtbare Wölbung ist ein sogenannter Kegel, welcher das von unten zuströmende Wasser radial nach außen umlenkt. Der in den Figuren 1 bis 4 dargestellte erfindungsgemäße Kolben 17 weist wiederum zwei Führungsmittel 21 in Gestalt von schmalen Zylindermantelabschnitten 23 auf. Oberhalb der Zylindermantelabschnitte 23, deren Seitenflächen unten parallel zueinander verlaufen, verbreitern sich die Führungsmittel 21 und treffen sich bogenförmig und unter der Oberseite des Kolbens 17. Zwischen den beiden Führungsmitteln 21 entsteht dadurch eine zur Kolbenachse A geneigt verlaufende, elliptische Leitfläche 25. Da die Führungsmittel 21 spiegelsymmetrisch zur Kolbenachse A ausgebildet sind, treffen sich die beiden Leitflächen 25 an ihrer unteren Kante 27 auf einer Linie oder zumindest auf einem schmalen gebogenen Übergangsbereich. Sie bilden also zusammen im Wesentlichen einen Keil, der das von unten zuströmende Wasser seitlich ablenkt. In den Figuren 3 und 4 ist der Kolben 17 in das Ende des Rohrs 3 teilweise eingetaucht. In der Stellung, wie sie in Fig. 3 dargestellt ist, wird der Kolben 17 von den vollständig in das Rohr 3 eingetauchten Führungsmitteln 21 radial geführt gehalten. Von unten in das Rohr 3 einströmendes Wasser kann so ungehindert zwischen dem Rohrende und den Leitflächen 25 austreten.

In der Darstellung gemäß Fig. 4 ist der Kolben 17 tiefer in das Rohr 3 eingetaucht und der torbogenförmige Austrittsquerschnitt für das Wasser ist wesentlich kleiner, weshalb auch eine geringere Wassermenge austreten kann. Wird der Kolben 17 weiter mit der Spindel 11 nach unten, d.h. tiefer in das Rohr 3 eingefahren, so verringert sich der Austrittsquerschnitt bis beispielsweise nur noch eine, wie in Fig. 4 durch unterbrochene Linien angedeutet, kleine Querschnittsflächen 29 übrig bleibt. Durch diesen kleinen, schlitzförmigen Querschnittsbereich 29 tritt das Wasser dann mit entsprechend hoher Geschwindigkeit aus und reißt allfällige Verunreinigungen, wie Sand und kleine Steine mit, sodass diese nicht zwischen die Dichtflächen 31, welche mit einer elastischen Beschichtung versehen sind, eintreten und zwischen der Bohrung am Rohr 3 und der Dichtfläche 31 eingeklemmt werden können. Eine Verletzung der elastischen Oberfläche wird dadurch vermieden.
Alternativ zu dieser bogenförmigen Querschnittsfläche 29 könnte letztere auch eine Trapez- oder Dreiecksform haben, d.h. die Seitenkanten der Leitfläche 25 könnten geradlinig von den Führungsmitteln 21 zur Oberseite des Kolbens 17 führen (keine Abbildung).
In den Ausführungen der Figuren 5 und 6 weist die Dichtfläche des Kolbens 17 eine Scheibenform auf, auf deren Peripherie zusätzliche Rillen 33 eingelassen sein können. Die Führungsmittel 21 sind wie im Stand der Technik ausgebildet, d.h. deren Seiten verlaufen im Wesentlichen parallel. Um den Austrittsquerschnitt 29 beim Öffnen des Ventils, d.h. Hochziehen des Kolbens 17, nicht schlitzförmig zu gestalten und damit anfänglich eine kleinere Querschnittsöffnung zu erzeugern, weist die Stirnfläche 35 des Rohrendes eine Bogenform auf. Dadurch wird beim Herausführen des Kolbens 17 vorerst nur ein schmaler Bogen - oder schlitzförmiger Querschnitt - geöffnet (wie im ersten Ausführungsbeispiel), durch welchen bereits Steinchen und andere Verunreinigungen mit hoher Geschwindigkeit ausgetragen werden können. Beim Schließen kann wiederum verhindert werden, dass mitgeführte Sandkörner oder Steinchen eingeklemmt werden.

Die Fig. 9 zeigt eine Ansicht einer weiteren Ausführungsform des erfindungsgemäßen Kolbens von schräg unten. Das Wort unten bezieht sich hierbei auf die übliche Einbaulage von Hydranten, bei denen das Steigrohr senkrecht steht und die Wasserzuleitung von unten, d.h. von der Erdseite erfolgt. Bei anderen Einbaulagen wie beispielsweise liegender oder hängender Einbaulage, bezieht sich der Begriff unten auf den Bereich des Hydranten, in den das fließende Wasser zuerst eintritt. Bei der dargestellten Ausführungsvariante des erfindungsgemäßen Kolbens 17 für ein Ventil für einen Hydranten sind Führungsmittel 21 vorgesehen, die aus Zylindermantelabschnitten 23 gebildet sind und sich Richtung Leitfläche 25 aufweiten. Die Dichtfläche 31 geht nahezu übergangslos in die Führungsmittel 21 über und ist mit einem Dichtband, welches sich rund um den Kolben entlang und/oder im Bereich der Schnittkurve zwischen Mantelfläche und Leitfläche 25 erstreckt und die Mantelfläche radial überragt versehen. Im Bereich der Führungsmittel kann dieses Dichtband derart dünn oder versenkt sein, dass es den Kolben in radialer Richtung nicht überragt. Es kann auch eine Aussparung des Dichtbandes im Bereich der Führungsmittel vorgesehen sein. Die Leitfläche 25 zur Ablenkung des Wasserstromes von axialer in radiale Richtung (nach außen) ist derart ausgebildet, dass das Wasser bei wenig geöffneter Spindel nur auf einer Seite des Kolbens austritt. Bei weiterem Öffnen der Spindel wird die Querschnittsöffnung 29 immer größer und erstreckt sich über einen immer größeren Umfangsabschnitt des Kolbens. Ab einer gewissen Spindelstellung ist der Kolben soweit aus dem Rohr 3 gezogen, dass das Wasser auch auf der anderen Seite und später in vollem Umfang vorbei in das Steigrohr fließen kann. Ferner ist die Leitfläche 25 aus zwei Flächen gebildet die sich in der unteren Kante 27 vereinen. Diese Kante stellt nicht zwingend den untersten Bereich der Leitfläche dar. In der Ausführung nach Fig. 9 liegt diese Kante im, höhenmäßig betrachtet, mittleren Bereich.
Durch diese asymmetrische Gestaltung des Kolbens ist eine noch bessere Dosierung der Durchflussmenge, im Speziellen für niedrige Durchflussraten möglich, sie bewirkt ferner eine raschere Verfügbarkeit des Wassers, bei wenig Umdrehung, und reduziert die Verletzungsgefahr der Dichtfläche durch eingeklemmte Steine oder ähnlichem.

Fig. 10 zeigt eine Schnittdarstellung der Ausführungsform des Kolbens aus Fig. 9. Dabei ist der Kolben 17 wiederum durch Führungsmittel 21 nach unten hin verlängert. Die Leitfläche 25 umfasst zwei zueinander geneigte Teilflächen, welche sich in der unteren Kante 27 treffen. Desweiteren ist an der Zylindermantelfläche bzw. der Dichtfläche 31 ein wulstförmiger Dichtstreifen vorgesehen.

Fig. 11 zeigt eine weitere Schnittdarstellung der Ausführungsform der Fig. 9, wobei die Schnittebene normal auf die der Schnittebene aus Fig. 10 steht. Die Leitfläche 25 weist im Bereich der Symmetrieebene des Kolbens einen Knick auf von dem aus sich die besagte Leitfläche hinunter, d.h. Richtung Führungsmittel 21 erstreckt.

Fig. 12 zeigt eine Schnittdarstellung einer Ausführungsform eines Kolbens in einem Rohr 3. Die Schnittebene entspricht der Symmetrieebene des Kolbens. Die Stellung des Kolbens 17 im Rohr 3 ist derart gewählt, dass auf einer Seite des Kolbens gerade noch kein Wasserdurchfluss möglich ist. Die gegenüberliegende Seite hingegen ist durch die asymmetrische, schräge Form der Leitfläche 25 geöffnet. Das Führungsmittel 21 ist in dieser Schnittdarstellung ebenfalls dargestellt. Die Dichtfläche 31 ist zur Gänze aus dem Rohr 3 ausgezogen.

Die vorliegende Erfindung kann derart ausgeführt sein, dass beim Herausfahren des Kolbens 17 aus dem Rohr 3 anfänglich eine Querschnittsöffnung 29 für den Wasseraustritt entsteht, welche zu Beginn eine in Umfangsrichtung des Kolbens 17 kurze, bogenförmige oder aus geraden Abschnitten zusammengesetzte Ausflussöffnung entsteht; dass aus dem zylindrischen Kolben 17 zylinderhufförmige Bereiche herausgeschnitten sind und im wesentlichen eine elliptische Leitfläche 25 am Kolben 17 bilden, die sich in der Kolbenachse schneiden, dass die Leitfläche 25 eben oder gebogen ausgebildet ist und dass am Ende des Rohres 3 der stirnseitige Bereich mindestens in einem Abschnitt in axialer Richtung bogenförmig aus der Ebene herausgeführt ist.
Ferner kann erfindungsgemäß vorgesehen sein, dass der Kolben 17 an seiner Unterseite mindestens eine Leitfläche 25 aufweist, die schräg zur Normalebene der Kolbenachse A verläuft, dass sich die Querschnittsöffnung 29 beim Herausfahren des Kolbens 17 zuerst nur über einen Bereich erstreckt und bei weiterem Herausfahren des Kolbens mindestens eine weitere Querschnittsöffnung für das strömende Medium passierbar ist, dass die Mantelfläche des Kolbens 17 als Dichtfläche 31 ausgebildet ist und dass die Dichtfläche mit der Leitfläche 25 mindestens eine Schnittkurve aufweist.

Nach einer weiteren Ausführungsform zeichnet sich die Erfindung dadurch aus, dass mindestens eine dieser Schnittkurven derart verläuft, dass sie im Bereich der Symmetriefläche der beiden Führungsmittel 21 ihren, bezogen auf die Bewegungsrichtung des Kolbens, höchsten Punkt aufweist, dass der, bezogen auf die Bewegungsrichtung des Kolbens höchste Punkt der Schnittkurve auf einer Seite des Kolbens 17 höher ist, als der bezogen auf die Bewegungsrichtung des Kolbens höchste Punkt auf der diametral gegenüberliegenden Seite des Kolbens und dass die Leitfläche 25 eine Krümmung aufweist, durch die sich die Leitfläche taschenförmig in den Boden des Kolbens 17 hinein erstreckt.

## Patentansprüche

1. Ventil für einen Hydranten (1), umfassend ein zylindrisches Rohr (3) zur Einführung in ein Steigrohr (9) des Hydranten (1), und einen im Rohr (3) axial mit einer Spindel (11) verschiebbar gelagerter Kolben (17), der bei geöffnetem Ventil (15) außerhalb des Rohrendes zu liegen kommt und durch mindestens zwei Führungsmittel (21) im Rohr (3) gehalten wird, wobei der Kolben (17) und das Rohr (3) derart geformt sind, dass beim Herausfahren des Kolbens (17) aus dem Rohr (3) anfänglich eine Querschnittsöffnung (29) für den Wasseraustritt entsteht, welche zu Beginn eine in Umfangsrichtung des Kolbens (17) kurze, bogenförmige Ausflussöffnung bildet, **dadurch gekennzeichnet, dass** die Stirnfläche (35) des Rohres (3) eine Bogenform aufweist.

2. Ventil nach Anspruch 1, **dadurch gekennzeichnet, dass** aus dem zylindrischen Kolben (17) zumindest zwei Bereiche herausgeschnitten sind die je eine im wesentlichen elliptische Leitfläche (25) am Kolben (17) bilden, wobei sich die Leitflächen (25) in der Kolbenachse schneiden.

3. Ventil nach Anspruch 2, **dadurch gekennzeichnet, dass** die Leitfläche (25) eben oder gebogen ausgebildet ist.

4. Ventil nach einem der Ansprüche 1 bis 3, **dadurch gekennzeichnet, dass** der Kolben (17) an seiner Unterseite mindestens eine Leitfläche (25) aufweist, die schräg zur Normalebene der Kolbenachse (A) verläuft.

5. Ventil nach einem der Ansprüche 1 bis 4, **dadurch gekennzeichnet, dass** sich die Querschnittsöffnung (29) beim Herausfahren des Kolbens (17) zuerst nur über einen Bereich erstreckt und bei weiterem Herausfahren des Kolbens mindestens eine weitere Querschnittsöffnung für das strömende Medium passierbar ist.

6. Ventil nach Anspruch 4, **dadurch gekennzeichnet, dass** die Mantelfläche des Kolbens (17) als Dichtfläche (31) ausgebildet ist und dass die Dichtfläche mit der Leitfläche (25) mindestens eine Schnittkurve aufweist.

7. Ventil nach Anspruch 6, **dadurch gekennzeichnet, dass** diese Schnittkurve derart verläuft, dass sie im Bereich der Symmetriefläche der beiden Führungsmittel (21) ihren, bezogen auf die Bewegungsrichtung des Kolbens, höchsten Punkt aufweist.

8. Ventil nach einem der Ansprüche 6 oder 7, **dadurch gekennzeichnet, dass** der, bezogen auf die Bewegungsrichtung des Kolbens höchste Punkt der Schnittkurve auf einer Seite des Kolbens (17) höher ist, als der bezogen auf die Bewegungsrichtung des Kolbens höchste Punkt auf der diametral gegenüberliegenden Seite des Kolbens.

## Claims

1. Valve for a hydrant (1) comprising a cylindrical pipe (3) for inserting into a riser pipe (9) of the hydrant (1) and a piston (17) which is axially displaceably mounted in the pipe (3) by means of a spindle (11), when the valve (15) is open said piston coming to rest outside the pipe end and being retained in the pipe (3) by at least two guide means (21), wherein the piston (17) and the pipe (3) are shaped such that when the piston (17) moves out of the pipe (3) initially a cross-sectional opening (29) is produced for the discharge of water, said cross-sectional opening initially forming a short arcuate outflow opening in the peripheral direction of the piston (17), **characterised in that** the front face (35) of the pipe (3) has an arcuate shape.

2. Valve according to Claim 1, **characterised in that** at least two regions are cut out of the cylindrical piston (17), each of said regions forming a substantially elliptical guide surface (25) on the piston (17), wherein the guide surfaces (25) intersect in the piston axis.

3. Valve according to Claim 2, **characterised in that** the guide surface (25) is configured to be planar or arcuate.

4. Valve according to one of Claims 1 to 3, **characterised in that** on its lower face the piston (17) has at least one guide surface (25) which extends obliquely to the normal plane of the piston axis (A).

5. Valve according to one of Claims 1 to 4, **characterised in that** when the piston moves out (17) the cross-sectional opening (29) initially extends over only one region and when the piston moves further out at least one further cross-sectional opening for the flowing medium is able to be passed.

6. Valve according to Claim 4, **characterised in that** the peripheral surface of the piston (17) is configured as a sealing surface (31) and **in that** the sealing surface has at least one intersection curve with the guide surface (25).

7. Valve according to Claim 6, **characterised in that** this intersection curve extends such that it has its highest point in the region of the symmetrical surface of the two guide means (21), relative to the direction of movement of the piston.

8. Valve according to one of Claims 6 or 7, **characterised in that** the highest point of the intersection curve is higher on one side of the piston (17) relative to the direction of movement of the piston than the highest point on the diametrically opposing side of the piston relative to the direction of movement of the piston.

## Revendications

1. Vanne pour une borne d'incendie (1), comprenant un tube cylindrique (3) pour introduction dans une conduite montante (9) de la borne d'incendie (1) et un piston (17) logé axialement déplaçable avec une tige (11) dans un tube (3), qui vient se placer en dehors de l'extrémité de tube lorsque la vanne (15) est ouverte et est maintenu dans la tube (3) par au moins deux moyens de guidage (21), le piston (17) et le tube (3) étant formés de telle manière que lors de la sortie du piston (17) hors du tube (3), il se forme initialement une ouverture de section transversale (29) pour la sortie d'eau, laquelle forme au début une ouverture d'écoulement courte, en forme d'arc dans le sens périphérique du piston (17), **caractérisée en ce que** la surface avant (35) du tube (3) comporte une forme arquée.

2. Vanne selon la revendication 1, **caractérisée en ce qu'**au moins deux zones sont séparées à partir du piston cylindrique (17), qui forment chacune sur le piston (17) une surface conductrice (25) pour l'essentiel elliptique, les surfaces conductrices (25) se croisant dans l'axe du piston.

3. Vanne selon la revendication 2, **caractérisée en ce que** la surface conductrice (25) est constituée plane ou arquée.

4. Vanne selon l'une quelconque des revendications 1 à 3, **caractérisée en ce que** le piston (17) comporte sur son côté inférieur au moins une surface conductrice (25), qui passe en diagonale par rapport au plan normal de l'axe de piston (A).

5. Vanne selon l'une quelconque des revendications 1 à 4, **caractérisée en ce que** l'ouverture de section transversale (29) ne s'étend d'abord que sur une zone lors de la sortie du piston (17) et au moins une autre ouverture de section transversale pour le milieu s'écoulant peut être praticable lors d'une sortie plus importante du piston.

6. Vanne selon la revendication 4, **caractérisée en ce que** la surface d'enveloppe du piston (17) est constituée comme surface d'étanchéité (31) et **en ce que** la surface d'étanchéité comporte au moins une courbe d'intersection avec la surface conductrice (25).

7. Vanne selon la revendication 6, **caractérisée en ce que** cette courbe d'intersection passe de telle manière qu'elle comporte son point extrême dans la zone de la surface de symétrie des deux moyens de guidage (21) eu égard au sens de déplacement du piston.

8. Vanne selon l'une quelconque des revendications 6 ou 7, **caractérisée en ce que** le point extrême de la courbe d'intersection basé sur le sens de déplacement du piston est plus élevé sur un côté du piston (17) que le point extrême basé sur le sens de déplacement du piston sur le côté diamétralement opposé du piston.
